# EUROPEAN PATENT APPLICATION

(11) **EP 4 424 169 A1**
(43) Date of publication of application: **04.09.2024**
(21) Application number: 24160983.3
(22) Date of filing: 01.03.2024
(51) Int. Cl.: A23F 5/26, A47J 31/00, A47J 31/06, A47J 31/36, F26B 9/00

(54) **STABILIZING COFFEE GROUNDS**

(30) Priority: 03.03.2023 BE 202305158
(71) Applicant: Vermeulen, Stefan, 9661 Parike (BE)
(72) Inventor: VERMEULEN, Stefan, 9661 Parike (BE); VERMEULEN, Bram, 9661 Parike (BE)
(74) Representative: De Clercq & Partners

(57) **Abstract**

In general the various aspects of the technology of the present disclosure generally relate to methods and devices for the in-situ stabilizing and storing coffee grounds to be repurposed.

## Description

### FIELD

In general the various aspects of the technology of the present disclosure generally relate to methods and devices for the in-situ stabilizing and storing coffee grounds to be repurposed.

### BACKGROUND

While a lot of research is done on the possibilities of the use of spent coffee grounds, currently, limited recycling systems exist for coffee grounds.

For instance, Nespresso has a dedicated network collecting the spent capsules wherein, due to the time lag between brewing and collecting, coffee grounds ferment and often fungi grow in and out of the capsules. The capsules are then ground in a dedicated plant to recycle the grounds from the aluminium used to make the capsules. The fermentation and deterioration of the coffee grounds during this period results in excessive concentrations of contaminants (e.g. spores of potentially dangerous fungi) in the coffee grounds. The spent coffee grounds are known to rapidly (within 1 or more days) deteriorate by molding.

Other recycling systems collect spent coffee grounds from barista's as a fertile base ground for inoculating them with eatable fungi, directly introducing them as a base for crop growing in a dedicated plant, enhancing a circular economy.

Finally, the currently existing recycling systems are mainly based on the collection of the entire wastage products without separating the waste from the process water. This results in large volumes and weights of spent coffee grounds being collected and transported to a processing facility where often one of the process steps process water is removed from the spent coffee grounds.

Therefore, a need exists for improved methods and devices for recycling spent coffee grounds.

### SUMMARY

A first overview of various aspects of the technology of the present disclosure is given hereinbelow, after which specific embodiments will be described in more detail. This overview is meant to aid the reader in understanding the technological concepts more quickly, but it is not meant to identify the most important or essential features thereof, nor is it meant to limit the scope of the present disclosure, which is limited only by the claims.

An aspect of the present disclosure relates to a method for in-situ stabilizing coffee grounds to be repurposed, the method comprising the consecutive steps of:
(a) brewing coffee and dispensing coffee grounds;
(b) collecting the dispensed coffee grounds;
(c) heating the collected coffee grounds; and;
(d) dehydrating the coffee grounds, thereby obtaining stabilized coffee grounds to be repurposed; preferably wherein steps (a), (b), (c) and (d) occur in a coffee brewing device.

In a particular embodiment, the method as disclosed herein provides that the stabilized coffee grounds to be repurposed have a residual moisture content ranging between 2.50 wt% and 30.0 wt%; preferably 3.0 to 15.0 wt.%, more preferably 4.0 to 7.50 wt.%.

In a particular embodiment, the method as disclosed herein provides that the stabilized coffee grounds to be repurposed have an active water content (AW) ranging between 0.10 and 0.60, preferably between 0.10 and 0.40, and more preferably between 0.10 and 0.25.

In a further embodiment, the method as disclosed herein provides that the heating of the coffee grounds occurs through radiation, convection and/or conduction.

In a particular embodiment, the method as disclosed herein provides that excess heat derived from the heating step is transferred to and recycled in a coffee brewing device.

In a further embodiment, the method as disclosed herein provides that during step (c) and (d) a negative pressure is applied.

In a particular embodiment, the method as disclosed herein provides that the dehydrating step (d) moisture is extracted from the heated coffee grounds through a membrane vacuum pump configured to purge moist air.

In a particular embodiment, the method as disclosed herein additionally comprises the step of mixing the coffee grounds during step (c) and/or (d), preferably using vibration, rotation and/or ultrasound mixing.

In a particular embodiment, the method as disclosed herein further comprises the step of collecting and repurposing the stabilized coffee grounds.

Another aspect of the present disclosure relates to a device for stabilizing and storing the stabilized coffee grounds to be repurposed, the device comprising:
- a collector configured to collect and process coffee grounds;
- a heater configured for heating the collected coffee grounds;
- a membrane vacuum pump for removing water from the heated coffee grounds; and;
- a storing unit for collecting and storing stabilized coffee grounds.

In a particular embodiment, the device as disclosed herein provides that it is integrated within a coffee brewing device.

In a further embodiment, the device as disclosed herein provides that it is a stand-alone unit configured to be operated with a separate coffee brewing device.

In a particular embodiment, the device as disclosed herein provides that excess heat generated by the heater is transferred to a coffee brewing device.

In a particular embodiment, the device as disclosed herein provides that the moisture purged through the water pump is recycled for reuse.

Another aspect of the present disclosure relates to the use of stabilized coffee grounds obtained from the method as disclosed herein, as a solid burnable fuel composition, filling material or as a base for extraction of valuable organic compounds.

### DETAILED DESCRIPTION

In the following detailed description, the technology underlying the present disclosure will be described by means of different aspects thereof. It will be readily understood that the aspects of the present disclosure, as generally described herein, and illustrated in the figures, can be arranged, substituted, combined, and designed in a wide variety of different configurations, all of which are explicitly contemplated and make part of this disclosure. This description is meant to aid the reader in understanding the technological concepts more easily, but it is not meant to limit the scope of the present disclosure, which is limited only by the claims.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or openended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

As used herein, relative terms, such as "left," "right," "front," "back," "top," "bottom," "over," "under," etc., are used for descriptive purposes and not necessarily for describing permanent relative positions. It is to be understood that such terms are interchangeable under appropriate circumstances and that the embodiment as described herein are capable of operation in other orientations than those illustrated or described herein unless the context clearly dictates otherwise.

Objects described herein as being "adjacent" to each other reflect a functional relationship between the described objects, that is, the term indicates the described objects must be adjacent in a way to perform a designated function which may be a direct (i.e. physical) or indirect (i.e. close to or near) contact, as appropriate for the context in which the phrase is used.

Objects described herein as being "connected" or "coupled" reflect a functional relationship between the described objects, that is, the terms indicate the described objects must be connected in a way to perform a designated function which may be a direct or indirect connection in an electrical or nonelectrical (i.e. physical) manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (e.g. increased or decreased results, depending on the context).

It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

An overview of various aspects of the technology of the present disclosure is given hereinbelow, after which specific embodiments will be described in more detail. This overview is meant to aid the reader in understanding the technological concepts more quickly, but it is not meant to identify the most important or essential features thereof, nor is it meant to limit the scope of the present disclosure, which is limited only by the claims. When describing specific embodiments, reference is made to the accompanying drawings, which are provided solely to aid in the understanding of the described embodiment.

Disclosed herein are improved methods and devices for recycling spent coffee grounds. In particular the recycling methods and devices as disclosed herein provide in that the spent coffee grounds are dried in-situ at the place where the coffee is brewed. After storing the dried coffee grounds they can be collected and transported to processing facilities where they are further processed and recycled.

An aspect of the present disclosure relates to a method for in-situ stabilizing coffee grounds to be repurposed, the method comprising the consecutive steps of:
(a) brewing coffee and dispensing coffee grounds;
(b) collecting the dispensed coffee grounds;
(c) heating the collected coffee grounds; and;
(d) dehydrating the coffee grounds, thereby obtaining stabilized coffee grounds to be repurposed; preferably wherein steps (a), (b), (c) and (d) occur in a coffee brewing device.

By dehydrating the spent coffee ground at the place (in -situ) where the coffee is brewed, the coffee grounds are stabilized and protected against molding and/or spore formation, thereby ensuring that the coffee grounds can be qualitatively stored (for a long term) for collection and recycling at a later date. The coffee grounds can be recycled/reused in various applications as for example an ecological slug repellent, filler for 3D printing, basis for coffee based HPL plates, pellets, etc. This method allows for the reduction of waste disposal and the production of a stable separated spent coffee ground stream for further usage and recycling.

Spent coffee grounds are difficult to extract from waste when intermixed due to the grinded structure. By adding value to the spent coffee grounds they become easily recyclable and many more applications are open to postprocessing.

As used herein, "coffee grounds" refers to the waste product that results from brewing coffee. Used or spent coffee grounds are generally regarded as waste, and they are usually thrown away or composted. Used coffee grounds are rich in sugars (comprising about 50wt%), proteins (comprising about 20wt%), and lignins (comprising about 20wt%). It is estimated that over 15 million tonnes of spent coffee grounds are generated annually.

As used herein, "in-situ " refers to "on site" within the meaning of locally" or "on the premises" describing where the method takes place. In particular, all steps of the method as disclosed herein (brewing the coffee and the subsequent coffee ground processing steps) occur at the same physical location.

Preferably the method steps are semi-automated or fully-automated steps allowing for the rapid and automated processing.

In a particular embodiment, the method as disclosed herein provides that the stabilized coffee grounds to be repurposed have a residual moisture content ranging between 2.50 wt% and 30.0 wt%; preferably 3.0 to 15.0 wt.%, more preferably 4.0 to 7.50 wt.%. More in particular, the method as disclosed herein provides that the stabilized coffee grounds to be repurposed have a residual moisture content equal to or below 30.0 wt%, more preferably equal to or below 25.0 wt%, equal to or below 20.0 wt%, equal to or below 15.0 wt%, equal to or below 14.0 wt%, equal to or below 13.0 wt%, equal to or below 12.0 wt%, equal to or below 11.0 wt%, equal to or below 10.0 wt%, equal to or below 9.0 wt%, equal to or below 8.0 wt%. In order to ensure that no molding occurs during the long term storage the residual moisture content of the stabilized coffee grounds to be repurposed is kept equal to or below 7.50 wt%, preferably equal to or below 7.0 wt%, more preferably equal to or below 6.50 wt%, more preferably equal to or below 6. 0 wt%, more preferably equal to or below 5.50 wt%, and more preferably equal to or below 5.0 wt%.

In a particular embodiment, the method as disclosed herein provides that the stabilized coffee grounds to be repurposed have an active water content (AW) ranging between 0.10 and 0.60, preferably between 0.10 and 0.40, and more preferably between 0.10 and 0.25.

Preferably, at the time of creation, spent coffee grounds consist of a solid pellet, weighing 18-32g, roughly 40-60wt% solid matter and 40-60% aqueous content and having a temperature of 50°C - 80°C. In order to prevent molding the infused water has to be extracted rapidly by heating and dehydrating the spent coffee grounds.

In a further embodiment, the method as disclosed herein provides that the heating of the coffee grounds occurs through radiation, convection and/or conduction.

In a further embodiment, the method as disclosed herein provides that during step (c) and (d) a negative pressure is applied.

In a particular embodiment, the method as disclosed herein provides that the dehydrating step (d) moisture is extracted from the heated coffee grounds through a membrane vacuum pump configured to purge moist air.

In a particular embodiment, the method as disclosed herein provides that excess heat derived from the heating step is transferred to and recycled in a coffee brewing device. For ecological purposes and to render the process in an efficient manner, the remaining heat in the stabilized coffee grounds is reintroduced into the brewing process.

The drying of the spent coffee grounds occurs through heating and dehydrating the spent coffee grounds according to the method as disclosed herein, allowing the spent coffee grounds to rapidly dry, preferably under low pressure, in a (completely or partially) enclosed system, thereby separating and recycling water from coffee grounds in order to obtain a stable powder which can be stored until collection is optimal.

The drying of the spent coffee grounds can occur in a pellet per pellet process, as a continuous process or as a batch process (e.g. on an hourly or daily basis).

In a particular embodiment, the method as disclosed herein additionally comprises the step of mixing the coffee grounds during step (c) and/or (d), preferably using vibration, rotation and/or ultrasound mixing. The mixing of the coffee grounds allows for the drying process (heating and dehydration) to occur on an efficient manner.

In a further embodiment, the method as disclosed herein provides that steps (a), (b), (c) and (d) occur in a coffee brewing device.

In a particular embodiment, the method as disclosed herein further comprises the step of collecting and repurposing the stabilized coffee grounds.

Another aspect of the present disclosure relates to a device for stabilizing and storing the stabilized coffee grounds to be repurposed, the device comprising:
- a collector configured to collect and process coffee grounds;
- a heater configured for heating the collected coffee grounds;
- a membrane vacuum pump for removing water from the heated coffee grounds; and;
- a storing unit for collecting and storing stabilized coffee grounds.

The device as disclosed herein is capable of drying a dedicated sample of coffee grounds based upon moisture content/weight/size and further comprises a controlling device for regulating the drying process.

Preferably the collector is configured to collect and process coffee grounds which is either an integrated module in a coffee brewing machine or a stand-alone device.

Preferably the heater configured for heating the collected coffee grounds and the membrane vacuum pump configured for removing water from the heated coffee grounds are adapted to heat and remove water from the spent coffee grounds in a closed environment (e.g. reactor). This closed environment typically comprises an inlet for the spent coffee grounds, an outlet for the processed coffee grounds, a heating liner to heat the spend coffee grounds, a vacuum extraction outlet to evacuate moist air preferably under lower pressure, optionally a sensor to measure parameters such as pressure, moisture and/or temperature at the inlet and/or the outlet and optionally a mixing device to mix the coffee grounds during the processing steps.

Preferably the storing unit is configured for collecting and storing stabilized coffee grounds.

In a particular embodiment, the device as disclosed herein provides that it is integrated within a coffee brewing device.

In a further embodiment, the device as disclosed herein provides that it is a stand-alone unit configured to be operated with a separate coffee brewing device.

In a particular embodiment, the device as disclosed herein provides that excess heat generated by the heater is transferred to a coffee brewing device.

In a particular embodiment, the device as disclosed herein provides that the moisture purged through the water pump is recycled for reuse.

Another aspect of the present disclosure relates to the use of stabilized coffee grounds obtained from the method as disclosed herein, as a filling material or a base material for extracting organic compounds. The filling material can be used for injection molding, High Pressure Laminate (HPL) panels or the like, as wood substitute, in heat pillow, etc.

## Claims

1. A method for in-situ stabilizing coffee grounds to be repurposed, the method comprising the consecutive steps of:
(a) brewing coffee and dispensing coffee grounds;
(b) collecting the dispensed coffee grounds;
(c) heating the collected coffee grounds; and;
(d) dehydrating the coffee grounds, thereby obtaining stabilized coffee grounds to be repurposed;
wherein steps (a), (b), (c) and (d) occur in a coffee brewing device.

2. The method according to claim 1, wherein the stabilized coffee grounds to be repurposed have a residual moisture content ranging between 2.50 wt% and 30.0 wt%; preferably 3.0 to 15.0 wt.%, more preferably 4.0 to 7.50 wt.%.

3. The method according to claim 1 or 2, wherein the heating of the coffee grounds occurs through radiation, convection and/or conduction.

4. The method according to any of claims 1 to 3, wherein excess heat derived from the heating step is transferred to and recycled in a coffee brewing device.

5. The method according to any of claims 1 to 4, wherein during step (c) and (d) a negative pressure is applied.

6. The method according to any of claims 1 to 5, wherein the dehydrating step (d) moisture is extracted from the heated coffee grounds through a membrane vacuum pump configured to purge moist air.

7. The method according to any of claims 1 to 6, additionally comprising the step of mixing the coffee grounds during step (c) and/or (d), preferably using vibration, rotation and/or ultrasound mixing.

8. The method according to any of claims 1 to 7, further comprising the step of collecting and repurposing the stabilized coffee grounds.

9. A device for stabilizing and storing the stabilized coffee grounds to be repurposed, the device comprising:
• a collector configured to collect and process coffee grounds;
• a heater configured for heating the collected coffee grounds;
• a membrane vacuum pump for removing water from the heated coffee grounds; and;
• a storing unit for collecting and storing stabilized coffee grounds.

10. The device according to claim 9, wherein said device is integrated within a coffee brewing device.

11. The device according to claim 9, wherein the device is a stand-alone unit configured to be operated with a separate coffee brewing device.

12. The device according to any of claims 9 to 11, wherein excess heat generated by the heater is transferred to a coffee brewing device.

13. The device according to any of claims 9 to 12, wherein the moisture purged through the water pump is recycled for reuse.

14. The use of stabilized coffee grounds obtained from the method according to any of claims 1 to 7, as a solid burnable fuel composition.
